# EUROPEAN PATENT APPLICATION

(11) **EP 2 645 642 A1**
(43) Date of publication of application: **02.10.2013**
(21) Application number: 12162764.0
(22) Date of filing: 30.03.2012
(51) Int. Cl.: H04L 12/58, H04L 29/08

(54) **Method to delay the outgoing emails**

(71) Applicant: Alcatel Lucent, 75007 Paris (FR)
(72) Inventor: Marce, Olivier, 91620 Nozay (FR); EL Mghazli, Yacine, 91620 Nozay (FR)
(74) Representative: Sciaux, Edmond

(57) **Abstract**

The invention concerns a method of managing outgoing messages sent by a user of a terminal in a communication network, characterized in that after the detection of the emotional level of the user by the application managing the sending of the message embedded in the user's terminal, and when a stress threshold is reached, the application managing the sending of the message takes an appropriate action.

## Description

The invention relates to a method of delaying outgoing messages sent by a user of a terminal, a computer program product according to said method.

The sender of an electronic mail message, or email, may be a person using a computer, a computer itself or a computer program.

For the sender, the time when emails were only used to exchange low priority information is passed and nowadays the users use these electronic communication for most of the inter-personal relation.

Indeed, for the huge majority of persons today, emails ,or their equivalent in the social networks context, as Facebook®, is the first media that is used to communicate with other human beings in multiple and different areas.

The users use emails to exchange with the family, with the colleagues, with the hierarchy, with the customers, with public services.

On the other hand, the extreme easiness provided by these new media lead to new social problems, which stayed anecdotic until recently.

Actually, it is a fact that inter-personal relations always generated emotions and stress (good or bad) and the cold formal paper format had the advantage to filter these emotions in important exchanges.

Emails have broken this virtuous barrier and now users often edit and send important messages under such an emotional level that the user lost part of its judgement.

A major downside of this is that a few minutes after the emotional peak, the author may regret the content, but it is too late.

The object of the invention to provide the user to opportunity to cancel or change his email once the stress peak is passed.

This object is achieved by a method of managing outgoing messages sent by a user of a terminal in a communication network, characterized in that after the detection of the emotional level of the user by the application managing the sending of the message embedded in the user's terminal, and when a stress threshold is reached, the application managing the sending of the message takes an appropriate action.

This object is achieved by a computer program product according to a method of managing outgoing messages sent by a user of a terminal in a communication network, characterized in that after the detection of the emotional level of the user by the application managing the sending of the message embedded in the user's terminal, and when a stress threshold is reached, the application managing the sending of the message takes an appropriate action.

Further developments of the invention can be gathered from the dependent claims and the following description.

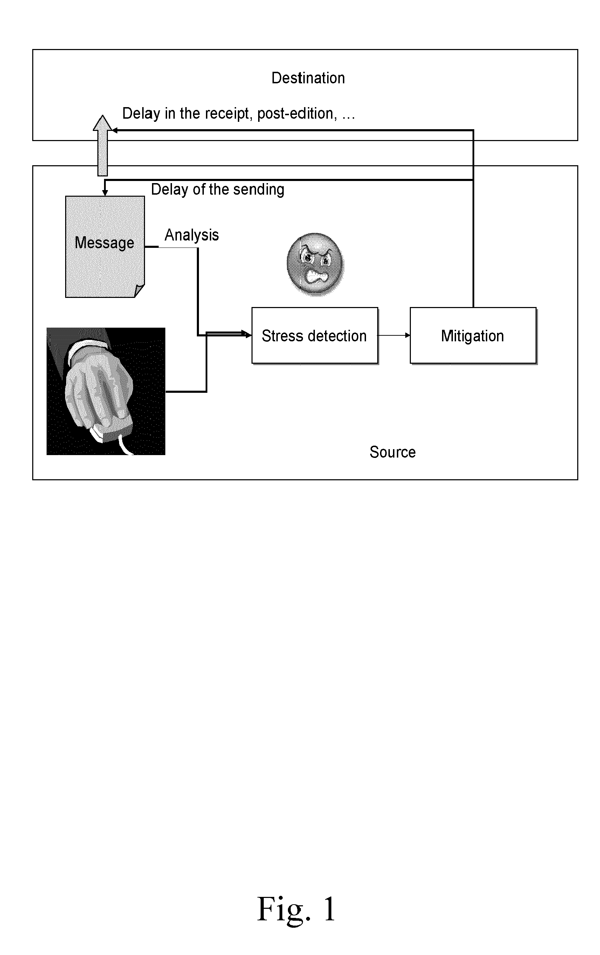

In the following the invention will be explained further making reference to the attached drawing.

The unique figure shows a flowchart depicting a method according to an embodiment of the invention.

In the following, a method according to the invention is elucidated by way of example, referencing the figure.

The invention provides the user to opportunity to cancel or change the messages the user sends if the user is stressed, once the stress peak is passed.

The messages could be electronic mail messages, or emails.

The sender of messages may be a person using a computer, a computer itself or a computer program.

The users send messages to exchange with their environment, such as with the family, with the colleagues, with the hierarchy, with the customers, with public services.

Users often edit and send important messages under such an emotional level that the user lost part of its judgement.

The method discloses the detection of the emotional level of the user by any possible means and when a stress threshold is reached, the application managing the sending of the message embedded in the user's device takes the appropriate actions.

The users send messages as emails, or their equivalent in the social networks context, as Facebook®, or instant messaging messages.

First, the emotional level of the user is detected, and if a stress threshold is reached then
- either the sending of the message by the user's terminal is delayed,
- or the message is sent with the stress information detected, such that this information is displayed to the receiver, letting the receiver to react in case of non appropriate message
- or the message is sent with the stress information and the system lets the receiver of the message to delete or edit it for a period of time depending of stress level.

The invention provides a method to detect the user emotional level by using one or several of the following methods:
- using sensors in the mouse device or in the keyboard,
- analyzing the edition of the message: time spent to edit the message, detect multiple rephrasing, multiple erasing,
- identify specific words like popular jargon that may not be appropriate.

The appropriate action taken by the application managing the sending of the message can be to ask confirmation from the user and at the most to hold the message a certain amount of time without informing the user itself (for his/her own good).

If the message that the user sends is an SMS, or Short Message Service, then the function to delay the sending of the message is deployed on the Short Message Service Center (SMSC) in the radio communication network.

Every user's terminal can send a delayed transmitted SMS message, by adding time-to-delay information enclosed by special predefined tags in the message body.

The time-to-delay information can be in the format of a real date/time, e.g. 05-06-11 9:20, or a digital number indicating the duration that to be delayed, e.g. 50, the unit (hour, minute) of this duration must be predefined.

Short Message Service Center (SMSC) has the capabilities of storing and forwarding messages to destination.

This invention adds three components into SMSC:
1) Message Body Sniffer.
   The Message Body Sniffer would be able to abstract time-to-delay information enclosed by special predefined tags from message body.
2) Delayed Transmission Message Queue.
   When the Message Body Sniffer detects a message that needs to be transmitted in delay, it then inserts this message into Delayed Transmission Message Queue at a proper place according to its time-to-delay information.

The messages in Delayed Transmission Message Queue are arranged in the sequence of the actual date/time to be sent out.
3) Delayed Transmission Timer.
   The Delayed Transmission Timer is set to rotatively check which message expires and need to be sent out. If a message expires, it will be sent to the forwarding function within SMSC and be forwarded to destination.

Thus, the invention provides the user to opportunity to cancel or change the email this user sends if the user is stressed, once the stress peak is passed.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present invention may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of managing outgoing messages sent by a user of a terminal in a communication network, **characterized in that** after the detection of the emotional level of the user by the application managing the sending of the message embedded in the user's terminal, and when a stress threshold is reached, the application managing the sending of the message takes an appropriate action.

2. A method according to claim 1, **characterized in that** the appropriate action taken by the application managing the sending of the message is that the sending of the message by the user's terminal is delayed.

3. A method according to claim 1, **characterized in that** the appropriate action taken by the application managing the sending of the message is that the message is sent with the stress information detected, such that this information is displayed to the receiver, letting the receiver to react in case of non appropriate message, or letting the receiver of the message to delete or edit it for a period of time depending of stress level.

4. A method according to claim 1 to 3, **characterized in that** the detection of the user emotional is provided by the information provided by
- sensors in the mouse device or in the keyboard of the user's terminal, or,
- semantic analyses of the edition of the message, the semantic analyses of the edition of the message being the identification of specific words like popular jargon that may not be appropriate multiple rephrasing, multiple erasing, or,
- analyses of the time spent to edit the message.

5. A computer program product comprising computer-executable instructions for performing a method when the program is run on a computer, of managing outgoing messages sent by a user of a terminal in a communication network, **characterized in that** after the detection of the emotional level of the user by the application managing the sending of the message embedded in the user's terminal, and when a stress threshold is reached, the application managing the sending of the message takes an appropriate action

6. A terminal programmed or configured to perform a method of managing outgoing messages sent by a user of a terminal in a communication network, **characterized in that** after the detection of the emotional level of the user by the application managing the sending of the message embedded in the user's terminal, and when a stress threshold is reached, the application managing the sending of the message takes an appropriate action.
